# EUROPEAN PATENT APPLICATION

(11) **EP 0 788 890 A1**
(43) Date of publication of application: **13.08.1997**
(21) Application number: 96200256.4
(22) Date of filing: 06.02.1996
(51) Int. Cl.: B41M 5/38, C09B 23/04, C09B 55/00

(54) **Dyes and dye-donor elements for thermal dye transfer recording**

(71) Applicant: AGFA-GEVAERT naamloze vennootschap, 2640 Mortsel (BE)
(72) Inventor: Vanmaele, Luc, 2640 Mortsel (BE)

(57) **Abstract**

A dye-donor element for use according to thermal dye sublimation transfer is provided. A dye-donor element according to the present invention comprises a support having thereon a dye layer comprising at least one dye corresponding to the following general formula (I) : 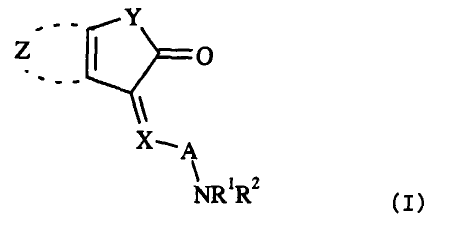 wherein:
X represents N or CR³;
Y represents O, NR⁴, S;
Z represents the atoms necessary to form an aromatic or hetero-aromatic ring;
A represents an aromatic ring including a hetero-aromatic ring
R¹ and R² each independently represent hydrogen, an alkyl group, an alkenyl group, an alkynyl group, an aryl group or R¹ and R² together with the nitrogen to which they are attached represent the necessary atoms to form a ring;
R³ represents hydrogen, cyano, an alkyl, an alkenyl, an alkynyl, an aryl, a heterocyclic ring, an alkoxy, an alkylthio, an arylthio, an aryloxy, a halogen, SO₂R⁵, COR⁵, CSR⁵, POR⁵R⁶;
R⁴ represents hydrogen, an alkyl, an alkenyl, an alkynyl, an aryl, a heterocyclic ring;
R⁵ and R⁶ each independently represents an alkyl, an aryl, an alkenyl, an alkynyl, an alkyloxy, an aryloxy, an alkylthio, an arylthio, an amino, a heterocyclic ring or R⁵ and R⁶ together with the atoms to which they are attached represent the necessary atoms to form a ring.

## Description

### 1. Field of the invention.

The present invention relates to dye-donor elements for use in thermal dye transfer methods in particular thermal dye sublimation or thermal dye diffusion transfer.

### 2. Background of the invention.

Thermal dye sublimation transfer or thermal dye diffusion transfer is a recording method in which a dye-donor element provided with a dye layer containing sublimable dyes having heat transferability is brought into contact with a receiver sheet or receiver element and selectively, in accordance with a pattern information signal, is heated by means of a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element.

A dye-donor element for use according to thermal dye sublimation transfer usually comprises a very thin support e.g. a polyester support, one side of which is covered with a dye layer comprising the printing dyes. Usually, an adhesive or subbing layer is provided between the support and the dye layer. Normally, the opposite side is covered with a slipping layer that provides a lubricated surface against which the thermal printing head can pass without suffering abrasion. An adhesive layer may be provided between the support end the slipping layer.

A dye-image receiving element for use according to thermal dye sublimation transfer usually comprises a support, e.g. paper or a transparent film coated with a dye-image receiving layer, into which the dye can diffuse more readily. An adhesive layer may be provided between the support end the receiving layer. A releasing agent may be contained in the receiving layer or in a separate layer on top of said receiving layer to improve the releasability of the receiving element from the donor element after the dye transfer has been effected.

The dye layer can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour.

A primary coloured dye layer e.g. a magenta or cyan or yellow dye layer may comprise only one primary coloured dye (a magenta, cyan or yellow dye respectively) or may comprise a mixture of two or more primary colour dyes of the same hue (two magenta, two cyan or two yellow dyes respectively).

Any dye can be used in such a dye layer provided it is easily transferable to the dye-image-receiving layer of the receiver sheet or element by the action of heat.

Typical and specific examples of dyes for use in thermal dye sublimation transfer have been described in e.g. EP 209,990, EP 209,991, EP 216,483, EP 218,397, EP 227,095, EP 227,096, EP 229,374, EP 235,939, EP 247,737, EP 257,577, EP 257,580, EP 258,856, EP 400,706,EP 279,330, EP 279,467, EP 285,665, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489.

In spite of the many dyes that already exist, there is still a continuous search for novel dyes and especially for dyes that are suited for use in dye-donor elements for thermal dye sublimation transfer printing, preferably dyes with low melting points and a good solubility in ecologically acceptable solvents.

### 3. Summary of the invention.

It is therefore an object of the present invention to provide dye-donor elements for use according to thermal dye sublimation transfer printing.

It is another object of the present invention to provide yellow and magenta dyes that can be used in said dye-donor elements, yielding transferred dye images having a high density and good light stability.

Other objects will become apparent from the description hereinafter.

In accordance with the present invention a dye-donor element for use according to thermal dye sublimation transfer is provided, said dye-donor element comprising a support having thereon a dye layer comprising at least one dye corresponding to the following general formula (I) : 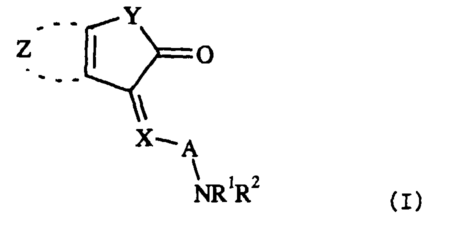 wherein:
X represents N or CR³;
Y represents O, NR⁴, S;
Z represents the atoms necessary to form an aromatic or hetero-aromatic ring;
A represents an aromatic ring including a hetero-aromatic ring
R¹ and R² each independently represent hydrogen, an alkyl group, an alkenyl group, an alkynyl group, an aryl group or R¹ and R² together with the nitrogen to which they are attached represent the necessary atoms to form a ring;
R³ represents hydrogen, cyano, an alkyl, an alkenyl, an alkynyl, an aryl, a heterocyclic ring, an alkoxy, an alkylthio, an arylthio, an aryloxy, a halogen, SO₂R⁵, COR⁵, CSR⁵, POR⁵R⁶;
R⁴ represents hydrogen, an alkyl, an alkenyl, an alkynyl, an aryl, a heterocyclic ring;
R⁵ and R⁶ each independently represents an alkyl, an aryl, an alkenyl, an alkynyl, an alkyloxy, an aryloxy, an alkylthio, an arylthio, an amino, a heterocyclic ring or R⁵ and R⁶ together with the atoms to which they are attached represent the necessary atoms to form a ring.

According to the present invention there is further provided a method for making an image comprising the steps of :
- bringing the dye layer of a dye donor element as defined above in face-to-face relationship with a receiving layer of an image receiving element;
- image-wise heating a thus obtained assemblage thereby forming a transfer image on said receiving element and
- separating said donor element from said image receiving element.

### 4. Detailed description of the invention.

According to a preferred embodiment, the dyes of the present invention correspond to the following general formula (II) : 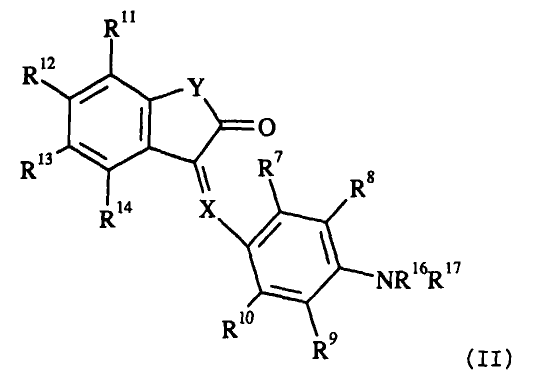 wherein
X, Y have the same meaning as defined in the above general formula (I);
R¹⁶, R¹⁷ each independently represents one of the meanings defined for R¹ and R² in the above general formula (I) and R⁷, R⁸, R⁹, R¹⁰, R¹¹, R¹², R¹³, R¹⁴ each independently represents hydrogen, an alkyl, an alkenyl, an alkynyl, an aryl, an alkylthio, an amino, an alkyloxy, an aryloxy, a carbonamido, a sulfamido, a hydroxy, a sulfonate, a halogen, CN, NO₂, NHSO₂R¹⁵, NHCOR¹⁵, O-COR¹⁵ or R⁸ and R⁹ together with R¹⁶ or R¹⁷ represent the necessary atoms to form a heterocyclic ring, or R⁷ and R⁸ together with the atoms to which they are attached or R⁹ and R¹⁰ together with the atoms to which they are attached or R¹¹ and R¹² togeher with the atoms to which they are attached or R¹² and R¹³ together with the atoms to which they are attached or R¹³ and R¹⁴ together with the atoms to which they are attached, or R³ and R⁷ or R¹⁰ together with the atoms to which they are attached represent the necessary atoms to form a ring and R¹⁵ represents one of the meanings defined for R⁵. In this preferred embodiment the cis and/or trans isomers (E and Z) can be present. Representatives of dyes (E and Z) corresponding to general formula (II) are listed in table 1 hereinafter but are not limited thereto.

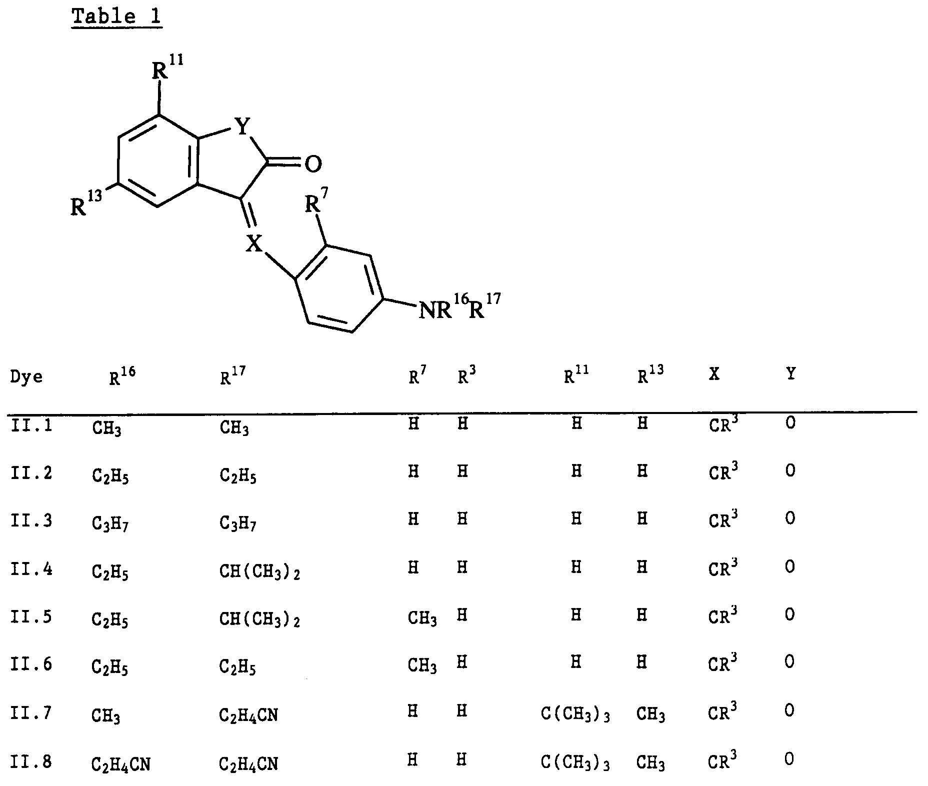

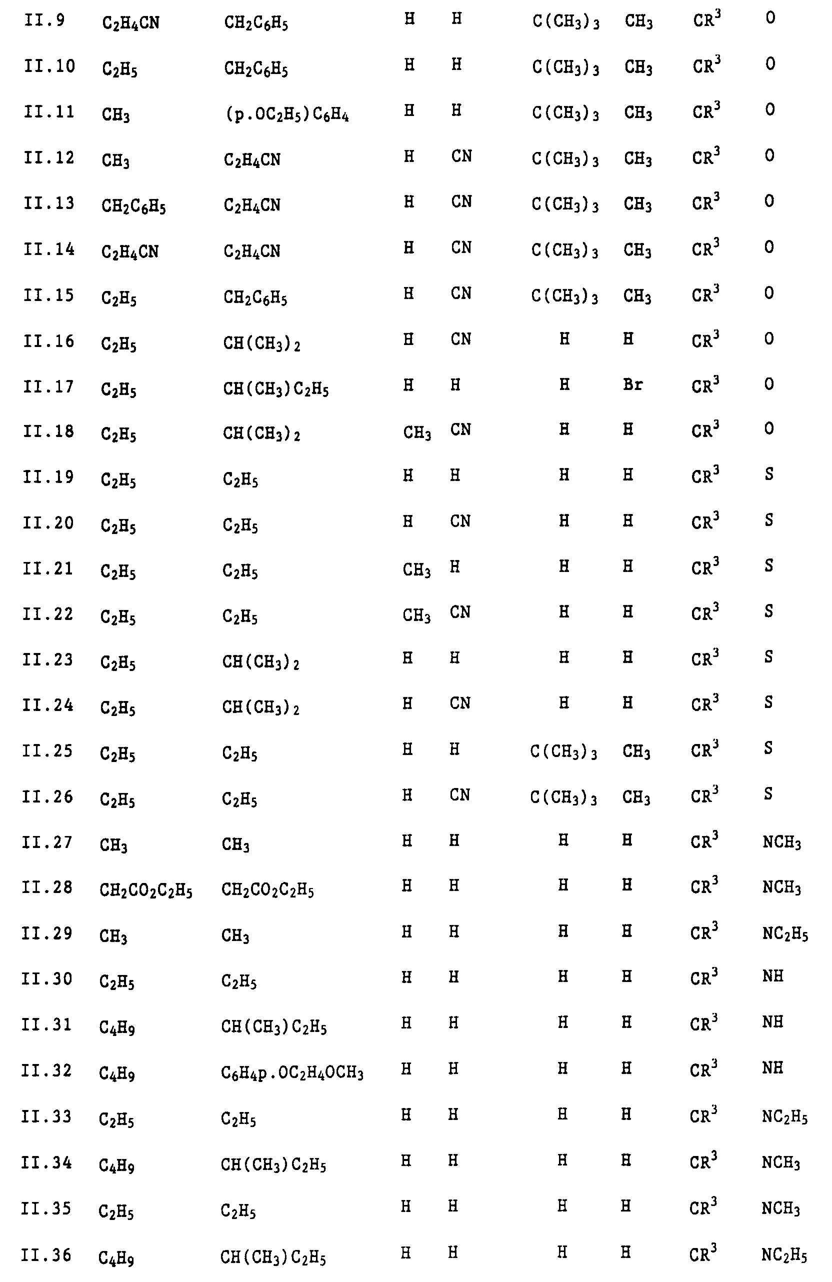

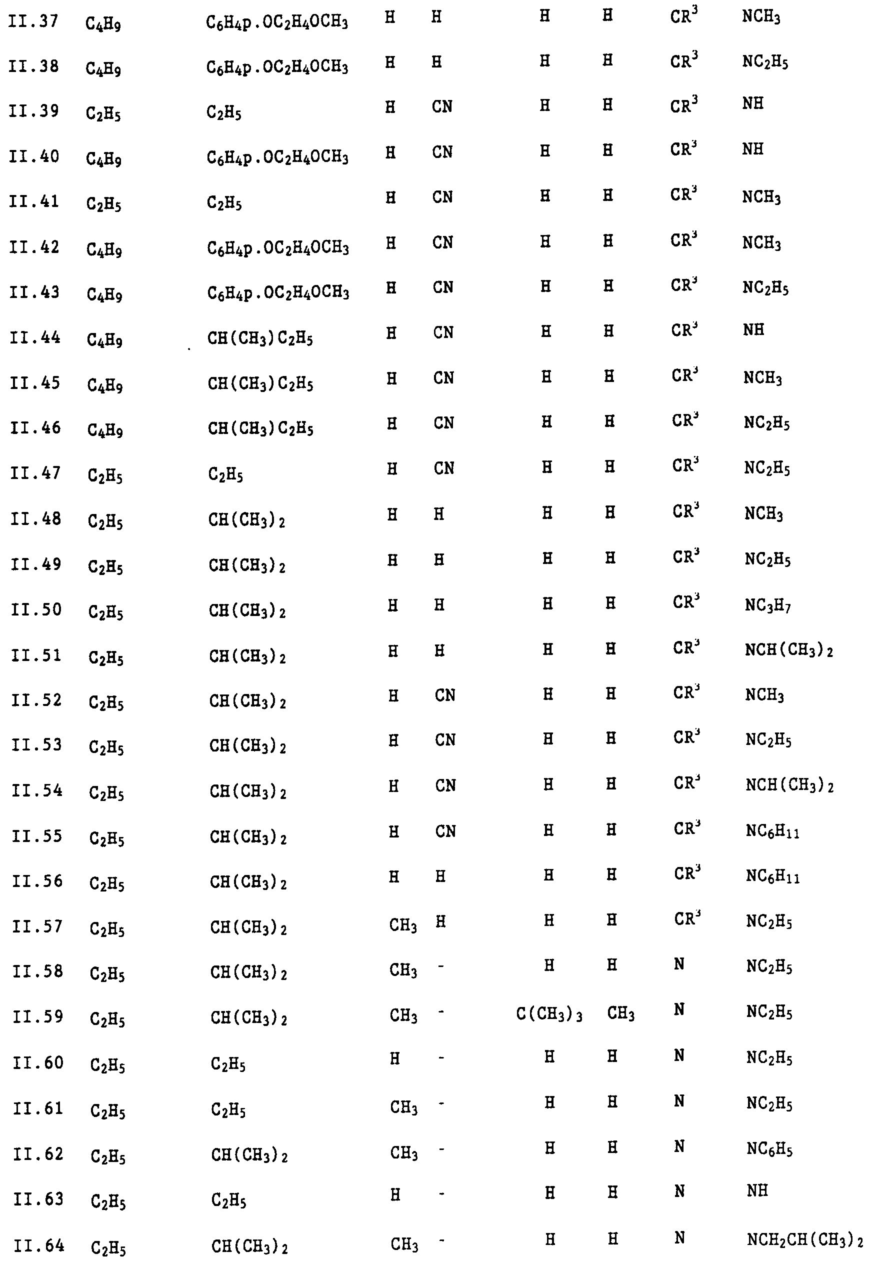

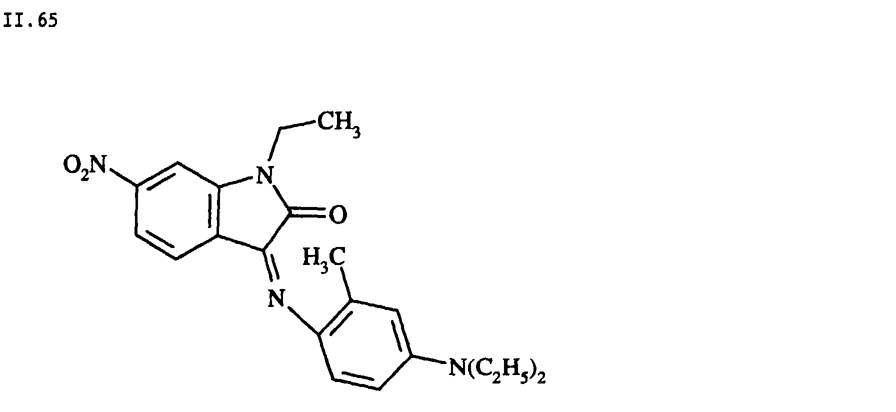

The dyes according to the invention can be prepared by methods known to those who are skilled in the art of organic synthesis. Preparation examples are given in J. Heterocyclic Chem., 1, 205-206 (1964); J. Chem. Soc. Perkin Trans. 2, 4, 615-620 (1984); J. Prakt. Chem., 2, 128 (1930); Chem. Heterocyclic Compd. (Engl. Transl.), 9, 1154 (1973); J. Chem. Soc., 620, 622 (1941); Bull. Soc. Chim. Fr., 4, 5 (1909), 1037; J. Med. Chem., 12(4), 722 (1969); Chem. Ber., 45, 1485 (1912); J. Chem. Soc. Perkin Trans. 1, 2, 283-290 (1992); J. Org. Chem., 41(23), 3743-3746 (1976).

Dyes from table 2 with R³ = CN are prepared via cyanide addition followed by oxidation, as shown in the following examples, without limiting, however the scope thereof.

### Example 1 - Synthesis of dye II.14

Dye II.8 is prepared according to procedures described in the literature mentioned above.

0.34 g of potassium cyanide are added to a solution of 1.9 g of dye II.8 in 23 ml of dimethyl sulfoxide at room temperature. After stirring for 30 minutes a solution of 0.87 g of 1,3-dibromo-5,5-dimethylhydantoin in 5 ml of N,N-dimethylacetamide is added at room temperature. The solution is stirred for 30 minutes and diluted with ethyl acetate. The reaction mixture is washed with a saturated sodium chloride solution in water, dried over magnesium sulfate, filtered and concentrated under reduced pressure. 1.9 g of dye II.14 are obtained as a mixture of E and Z-isomers which can be further separated using column chromatography.

The dye layer of the dye-donor element is formed preferably by adding the dyes, a polymeric binder medium, and other optional components to a suitable solvent or solvent mixture, dissolving or dispersing by ball-milling these ingredients to form a coating composition that is applied to a support, which may have been provided first with an adhesive or subbing layer, and dried.

The dye layer thus formed has a thickness of about 0.2 to 5.0 µm, preferably 0.4 to 2.0 µm, and the amount ratio of dye to binder ranges from 9:1 to 1:3 by weight, preferably from 2:1 to 1,2 by weight.

The following polymers can be used as polymeric binder : cellulose derivatives, such as ethyl cellulose, hydroxyethyl cellulose, ethylhydroxy cellulose, ethylhydroxyethyl cellulose, hydroxypropyl cellulose, methyl cellulose, cellulose nitrate, cellulose acetate formate, cellulose acetate hydrogen phthalate, cellulose acetate, cellulose acetate hydrogen phthalate, cellulose acetate, cellulose acetate propionate, cellulose acetate butyrate, cellulose acetate pentanoate, cellulose acetate benzoate, cellulose triacetate, vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; poly(styrene-co-acrylonitrile); polysulfones; polyphenylene oxide; organosilicones such as polysiloxanes; epoxy resins and natural resins, such as gum arabic. Preferably, the binder for the dye layer of the present invention comprises cellulose acetate butyrate or poly(styrene-co-acrylonitrile).

The dye layer of a dye donor element in connection with the present invention may be a continuous dye layer of one or more dyes or the dye layer may consist of a repeating sequence of at least two dye frames. According to a particular embodiment for making colour images the dye donor element can consist of a repeating sequence of a yellow, magenta and cyan dye frame.

The dyes of the present invention can be used alone or mixed with one another, or even mixed with other colour dyes.

The dyes according to formula (I) are useful for making black and white images using the thermal transfer process. Such black and white images may be composed of 3 primary dyes, i.e. yellow, magenta and cyan, that are transferred in sequence to an image receiving element or said black and white images may be obtained by transferring a black mixture of several dyes. In each case at least one of the constituting dyes will be a dye according to formula (I).

Typical and specific examples of other primary colour dyes for use in thermal dye sublimation transfer have been described in e.g. EP 400,706, EP 209,990 , EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, US 4,743,582, US 4,753,922, US 4,753,923, US 5,026,677, US 4,757,046, US 4,769,360, US 4,771,035, JP 84/78,895, JP 84/78,896, JP 84/227,490, JP 84/227,948, JP 85/30,391, JP 85/229,787, JP 85/229,789, JP 85/229,790, JP 85/229,791, JP 85/229,792, JP 85/229,793, JP 85/229,795, JP 86/268,493, JP 86/268,494, JP 85/268,495 and JP 86/284,489.

The coating layer may also contain other additives, such as curing agents, preservatives, organic and inorganic fine particles, dispersing agents, antistatic agents, defoaming agents, viscosity-controlling agents , these and other ingredients having been described more fully in EP 133,011, EP 133,012, EP 111,004 and EP 279,467.

Any material can be used as the support for the dye-donor element provided it is dimensionally stable and capable of withstanding the temperatures involved, up to 400° C over a period of up to 20 msec, and is yet thin enough to transmit heat applied on one side through to the dye on the other side to effect transfer to the receiver sheet within such short periodes, typically from 1 to 10 msec. Such materials include polyesters such as polyethylene terephthalate, polyamides, polyacrylates, polycarbonates, cellulose esters, fluorinated polymers polyethers, polyacetals, polyolefins, polyimides, glassine paper and condenser paper. Preference is given to a support comprising polyethylene terephthalate. In general, the support has a thickness of 2 to 3 µm. The support may also be coated with an adhesive of subbing layer, if desired.

The dye layer of the dye-donor element can be coated on the support or printed thereon by a printing technique such as a gravure process.

A dye barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrlate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227091 and EP 228065. Certain hydrophilic polymers, e.g. those described in EP 227091, also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C₂-C₂₀ aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers have been described in e.g. EP 138483, EP 227090, US 4567113, US 4572860, US 4717711. Preferably the slipping layer comprises a styrene-acrylonitrile copolymer or a styrene-acrylonitrile-butadiene copolymer or a mixture thereof or a polycarbonate as described in EP-A-527520 as binder and a polysiloxane-polyether copolymer or polytetrafluoroethylene or a mixture thereof as lubicrant in an amount of 0.1 to 10% by weight of the binder or binder mixture.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet or receiver element this support must be coated with a special surface, a dye-image-receiving layer, into which the dye can diffuse more readily. The dye-image-receiving layer may comprise, e.g. a polycarbonate, a polyurethane, a polyester, a polyamide, polyvinyl chloride, polystyrene-co-acrylonitrile, polycaprolactone or mixtures thereof.

The dye-image receiving layer may also comprise a heat-cured product of poly(vinylchloride/co-vinylacetate/co-vinylalcohol) and polyisocyanate. Suitable dye-receiving layers have been described in e.g. EP 133011, EP 133012, EP 144247, EP 227094, EP 228066.

In order to improve the light-fastness and other stabilities of recorded images, UV absorbers, singlet oxygen quenchers such as HALS-compounds (Hindered Amine Light Stabilizers) and/or antioxidants can be incorporated into the receiving layer.

The dye layer of the dye-donor element or the dye-image-receiving layer of the receiver sheet may also contain a releasing agent that aids in separating the dye-donor element from the receiving sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133012, JP 85/19138 and EP 227092.

The dye-donor elements according to the invention can be used to form a dye transfer image, which process comprises placing the dye layer of the dye-donor element in face-to-face relation with the dye-image-receiving layer of the receiver sheet or receiver element and image-wise heating preferably from the back of the dye-donor element. The transfer of the dye is preferably accomplished by heating for about several milliseconds at a temperature of 400°C.

When the process is performed for but one single color, a monochrome dye transfer image is obtained. A multicolor image can be obtained by using a dye-donor element containing three or more primary colour dyes and sequentially performing the process steps described above for each colour. After the first dye has been transferred, the elements are peeled apart. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon loaded polycarbonate coated with a thin aluminum film. Current is injected into the resistive ribbon by electrically adressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology compared to the thermal head technology, according to which the various elements of the thermal head get hot and must cool down before the head can move to the next printing position.

The following examples illustrate the invention in more detail without limiting, however, the scope thereof.

### Example 2

The absorption maxima (λₘₐₓ) of the dyes identified below were determined in methanol unless otherwise stated. The results are listed in table 2.

**Table 2**

| Dye | λₘₐₓ (nm) | εₘₐₓ |
|---|---|---|
| II.7 | 432 | 32 365 |
| II.8 | 430 | 35 694 |
| II.9 | 440 | 38 543 |
| II.10 | 456 | 44 100 |
| II.11 | 450 | 38 560 |
| II.33 | 442 | 33 218 |
| II.34 | 442 | 34 632 |
| II.31 | 444 | 35 803 |
| II.35 | 442 | 32 435 |
| II.36_{(cis)} | 446 | 24 923 |
| II.36₍ₜᵣₐₙₛ₎ | 442 | 36 397 |
| II.30 | 440 | 33 010 |
| II.32 | 436 | 33 616 |
| II.37 | 436 | 24 950 |
| II.38 | 438 | 32 042 |
| II.41 | 502 | 19 189 |
| II.39 | 508 | 18 169 |
| II.46 | 506 | 20 222 |
| II.47 | 504 | 18 460 |
| II.44_{(cis)} | 504 | 18 278 |
| II.40 | 494 | 30 187 |
| II.45 | 502 | 18 836 |
| II.14 | 478 | 18 298 |
| II.13₍ₜᵣₐₙₛ₎ | 508 | 25 394 |
| II.13_{(cis)} | 486 | 19 043 |

### Example 3

### Receiving sheets

As receiving sheets is used the commercially available Agfa Drystar™ acceptor :
DRYSTAR™ TS 20 - Opaque film.

Dye-donor elements for use according to thermal dye sublimation transfer were prepared as follows.

A solution in methyl ethyl ketone of 0.5% by weight of dye and 0.5% by weight of poly(styrene-co-acrylonitrile) (PSA) (Luran™ 388s, supplied by BASF Germany) as a binder was prepared.

A dye layer having a wet thickness of 100 µm was coated from this solution on a polyethylene terephthalate film support having a thickness of 6 µm and carrying a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a polycarbonate having the following structural formula to form a heat resistant layer : 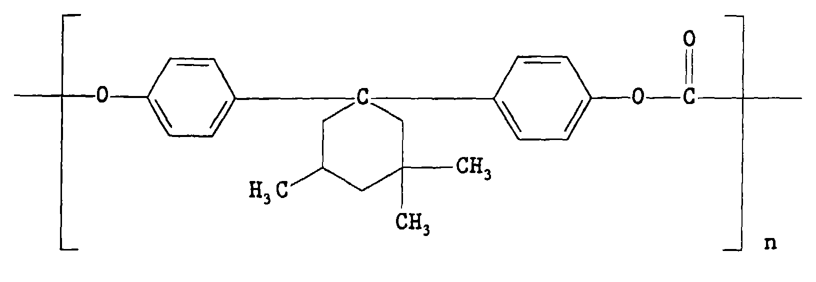 wherein n has a value giving a polycarbonate with a relative viscosity of 1.295 (measured in a 0.5% by weight solution in dichloromethane).

Finally, a top layer of polyether-modified polydimethylsiloxane (Tegoglide 410, Goldschmidt) was coated from a solution in isopropanol on the resulting heat-resistant polycarbonated layer.

The dye-donor element was printed in combination with a receiver sheet in a Mitsubishi colour video printer CP100E.

The receiver sheet was separated from the dye-donor element and the colour density value of the recorded image was measured in reflection by means of a Macbeth TR 924 densitometer in the red, green, and blue regions in status A mode; Dₘₐₓ values were likewise measured in reflection.

The above described experiment was repeated for each of the dyes identified in table 3 hereinafter. The results are also given in table 3.

**Table 3**

| Dye | Dₘₐₓ | Spectral absorption in Status A behind filter in reflex | | |
|---|---|---|---|---|
| | | Red | Green | Blue |
| II.7 | 209 | 5 | 8 | 150 |
| II.8 | 122 | 5 | 7 | 121 |
| II.9 | 150 | 5 | 9 | 150 |
| II.10 | 185 | 5 | 18 | 150 |
| II.11 | 177 | 5 | 25 | 150 |
| II.12 | 98 | 7 | 100 | 86 |
| II.13 (trans) | 119 | 7 | 120 | 67 |
| II.13 (cis) | 74 | 4 | 72 | 74 |
| II.14 | 62 | 3 | 49 | 67 |
| II.30 | 350 | 4 | 11 | 150 |
| II.33 | 359 | 4 | 8 | 150 |
| II.34 | 333 | 3 | 9 | 150 |
| II.31 | 273 | 3 | 13 | 150 |
| II.35 | 372 | 4 | 9 | 150 |
| II.36 (cis) | 282 | 3 | 11 | 150 |
| II.32 | 165 | 3 | 14 | 150 |
| II.37 | 205 | 3 | 12 | 150 |
| II.38 | 192 | 3 | 12 | 150 |
| II.41 | 199 | 12 | 150 | 85 |
| II.39 | 166 | 20 | 150 | 73 |
| II.40 | 81 | 10 | 82 | 55 |
| II.44 | 137 | 12 | 138 | 67 |
| II.45 | 159 | 10 | 150 | 79 |
| II.46 | 166 | 10 | 150 | 78 |
| II.36 (trans) | 299 | 6 | 11 | 150 |
| II.47 | 181 | 9 | 150 | 88 |

## Claims

1. A dye donor element for use according to the thermal dye transfer process, said dye donor element comprising on a support a dye layer comprising a binder and at least one heterocyclic dye according to formula (I) : 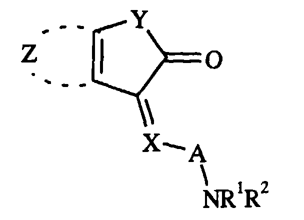 wherein
X represents N or CR³;
Y represents O, NR⁴, S;
Z represents the atoms necessary to form an aromatic or hetero-aromatic ring;
A represents an aromatic ring including a hetero-aromatic ring
R¹ and R² each independently represents hydrogen, an alkyl group, an alkenyl group, an alkynyl group, an aryl group or R¹ and R² together with the nitrogen to which they are attached represent the necessary atoms to form a ring;
R³ represents hydrogen, cyano, an alkyl, an alkenyl, an alkynyl, an aryl, a heterocyclic ring, an alkoxy, an alkylthio, an aryloxy, a halogen, SO₂R⁵, COR⁵, CSR⁵, POR⁵R⁶;
R⁴ represents hydrogen, an alkyl, an alkenyl, an alkynyl, an aryl, a heterocyclic ring;
R⁵ and R⁶ each independently represents an alkyl, an aryl, an alkenyl, an alkynyl, an alkyloxy, an aryloxy, an alkylthio, an arylthio, an amino, a heterocyclic ring or R⁵ and R⁶ together with the atoms to which they are attached represent the necessary atoms to form a ring.

2. A dye donor element according to claim 1 wherein said dye layer consists of a repeating sequence of at least two dye frames, at least one of said dye frames containing a dye according to formula (I).

3. A dye donor element according to claim 1 wherein said dye layer comprises a black mixture of dyes.

4. A dye donor element according to claim 2 wherein said dye layer consists of a repeating sequence of a yellow, a magenta and a cyan coloured dye frame.

5. A dye donor element according to claim 1 wherein said dye corresponds to the following general formula: 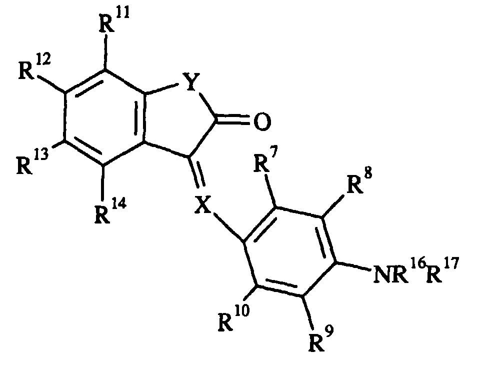 wherein:
X represents N or CR³;
Y represents O, NR⁴, S;
R³ represents hydrogen, cyan, an alkyl, an alkenyl, an alkynyl, an aryl, a heterocyclic ring, an alkoxy, an alkylthio, an arylthio, an aryloxy, a halogen, SO₂R⁵, COR⁵, CSR⁵, POR⁵R⁶;
R⁴ represents hydrogen, an alkyl, an alkenyl, an alkynyl, an aryl, a heterocyclic ring;
R⁵ and R⁶ each independently represents an alkyl, an aryl, an alkenyl, an alkynyl, an alkyloxy, an aryloxy, an alkylthio, an arylthio, an amino, a heterocyclic ring or R⁵ and R⁶ together with the atoms to which they are attached represent the necessary atoms to form a ring;
R¹⁶, R¹⁷ each independently represents hydrogen, an alkyl group, an alkenyl group, an alkynyl group, an aryl group or R¹⁶ and R¹⁷ together with the nitrogen to which they are attached represent the necessary atoms to form a ring;
R⁷, R⁸, R⁹, R¹⁰, R¹¹, R¹², R¹³, R¹⁴ each independently represents hydrogen, an alkyl, an alkenyl, an alkynyl, an aryl, an alkylthio, an amino, an alkyloxy, an aryloxy, a carbonamido, a sulfamido, a hydroxy, a sulfonate, a halogen, CN, NO₂, NHSO₂R¹⁵, NHCOR¹⁵, O-COR¹⁵ or
R⁸ and R⁹ together with R¹⁶ or R¹⁷ represent the necessary or atoms to form a heterocyclic ring, or
R⁷ and R⁸ together with the atoms to which they are attached or R⁹ and R¹⁰ together with the atoms to which they are attached or R¹¹ and R¹² togeher with the atoms to which they are attached or R¹² and R¹³ together with the atoms to which they are attached or R¹³ and R¹⁴ together with the atoms to which they are attached, or R³ and R⁷ or R¹⁰ together with the atoms to which they are attached represent the necessary atoms to form a ring and
R¹⁵ represents an alkyl, an aryl, an alkenyl, an alkynyl, an alkyloxy, an aryloxy, an alkylthio, an arylthio, an amino or a heterocyclic ring.

6. A method for making an image comprising the steps of :
- bringing the dye layer of a dye donor element as defined in any of the above claims in face-to-face relationship with a receiving layer of an image receiving element;
- image-wise heating a thus obtained assemblage thereby forming a transfer image on said receiving element and
- separating said dye donor element from said image receiving element.
